# EUROPÄISCHE PATENTANMELDUNG

(11) **EP 3 241 597 A1**
(43) Veröffentlichungstag der Anmeldung: **08.11.2017**
(21) Anmeldenummer: 17160189.1
(22) Anmeldetag: 09.03.2017
(51) Int. Cl.: B01D 17/02, B01L 3/00

(54) **PHASENTRENNKAMMER UND VERFAHREN ZUR TRENNUNG VON ZWEI PHASEN**

(30) Priorität: 03.05.2016 DE 102016108258
(71) Anmelder: Plan Optik AG, 56479 Elsoff (DE)
(72) Erfinder: SCHILLING, Alexander, 56479 Elsoff (DE); SCHILLING, Michael, 56479 Elsoff (DE)
(74) Vertreter: Harrison, Robert John

(57) **Zusammenfassung**

Offenbart ist eine Phasentrennkammer (10) mit einem dreieckförmigen Hohlkörper (20), wobei der dreieckförmigen Hohlkörper (20) einen ersten Auslass (31) an einer ersten Ecke (21), einen zweiten Auslass (32) an einer zweiten Ecke (22) und einen Einlass (35) an einer dritten Ecke (23) aufweist und wobei der dreieckförmige Hohlkörper (20) so angeordnet ist, dass die Kante zwischen der ersten Ecke (21) und der zweiten Ecke (22) im Wesentlichen vertikal angeordnet ist.

## Beschreibung

Die Erfindung betrifft einen Phasentrenner mit einer Phasentrennkammer zur Trennung von einem Zweiphasen-Gemisch, z.B. einem Gemisch aus Öl und Wasser.

Mikrofluidische Phasentrenner der eingangs genannten Art sind bekannt. Zum Beispiel offenbart das US Patent Nr. 6,676,835 B2 (O'Connor et al) einen Phasentrenner mit einem Einlass-Kanal für ein Wasser-/Öl-Gemisch und zwei Auslass-Kanäle. Die Phasentrennung erfolgt in dem Einlass-Kanal und die zwei getrennten Phasen werden jeweils in die zwei Auslass-Kanäle weitergeleitet.

US Patent Nr. US 7,575,681 B2 (Angelescu et al) offenbart auch einen mikrofluidischen Phasentrenner zur Analyse von Fluiden. Der Phasentrenner hat eine Membran zur Trennung der jeweiligen Phasen. Bei solchen Phasentrennern zeigt die Erfahrung, dass die Membrane mit der Zeit verstopfen und nicht weiter benutzt werden können, bis die Membrane ausgetauscht werden.

Internationale Patentanmeldung Nr. WO 2007/006033 A2 (MIT) offenbart einen kapillaren Phasentrenner mit einer Mehrzahl von Kanälen, wobei der Fluiddruck so angepasst ist, dass der Fluiddruck den kapillaren Druck in den Kanälen nicht übersteigt.

Eine Pressemitteilung des Fraunhofers IST vom 3. November 2015 erläutert das Prinzip der Phasentrenner in einem Y-förmigen mikrofluidischen Kanal, welcher die unterschiedlichen Oberflächenspannungen der jeweiligen Phasen für eine Trennung der zwei Phasen verwendet.

Zum besseren Verständnis wird die Erfindung nun anhand einer Ausführungsform und Zeichnungen näher erläutert. Es zeigen:
Fig. 1 einen Phasentrenner mit einer Phasentrennkammer gemäß der Erfindung;
Fig. 2 einen Proportionalventil für den Auslass der Phasentrennkammer; und
Fig. 3 einen Ablauf des Trennverfahrens.

In dieser Beschreibung wird der Begriff "mikrofluidisch" für Strukturen und Vorrichtungen verwendet, durch die Fluiden fließen und wobei eine der Dimensionen weniger als 500µm beträgt.

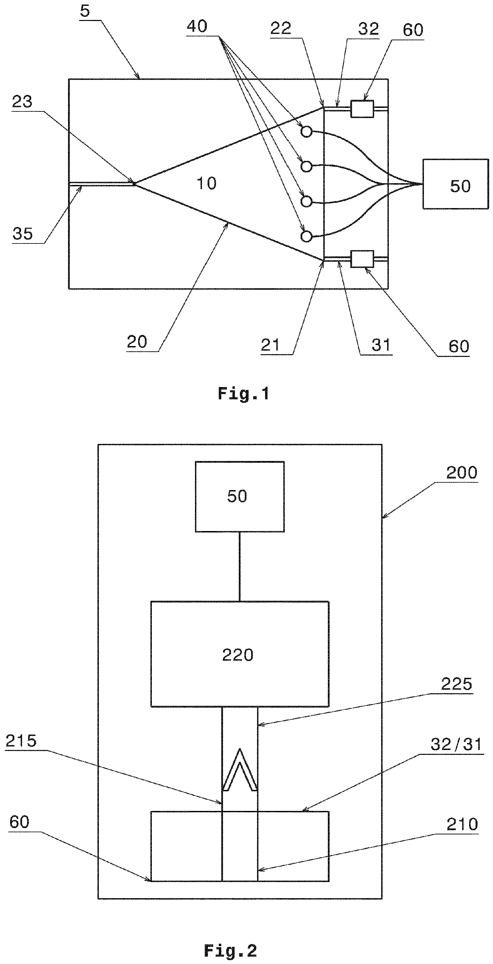

Fig. 1 zeigt schematisch einen mikrofluidischen, kontinuierlichen Phasentrenner 5 mit einer Phasentrennkammer 10, Proportionalventilen 60 und einer Steuerungseinheit 50.

Die Phasentrennkammer 10 umfasst einen dreieckförmigen Hohlkörper 20 aus einem Glasbauteil mit einem Einlass 35 und zwei Auslässe 31 und 32, die jeweils an den Ecken 21, 22 oder 23 des dreieckförmigen Hohlkörpers 20 angeordnet sind. Die Form des dargestellten, dreieckförmigen Hohlkörpers 20 entspricht einem gleichschenkligen, auf einer der beiden gleichen Ecken 21 oder 22 stehenden Dreieck. Die Kante zwischen den beiden gleichen Ecken 21 und 22 ist somit im Wesentlichen vertikal angeordnet. Andere dreieckförmige Formen sind allerdings denkbar.

Durch den Einlass 35 an der dritten Ecke 23 des dreieckförmigen Hohlkörpers 20 fließt ein Zweiphasen-Gemisch. In einem nicht einschränkenden Beispiel ist das Zweiphasen-Gemisch eine Emulsion aus Öl und Wasser. Andere Arten von zweiphasigen Gemischen lassen sich durch die Phasentrennkammer 10 trennen, z.B., auch ein zweiphasiges System aus organischer und fluorierter Phase (ohne Wasser) ist trennbar.

Das Gemisch wird in die Phasentrennkammer 10 durch den Einlass 35 eingeleitet und ein Trennungsprozess zur Trennung der jeweiligen Phasen des Gemisches fängt in dem dreieckförmigen Hohlkörper 20 an. Zwei Phasen, die durch eine Phasengrenzfläche getrennt sind, bilden sich in dem Hohlkörper 20. Die erste Phase, die weitgehend nur Wasser in diesem Beispiel enthält, und unterhalb der Phasengrenzfläche ist, fließt aus dem ersten Auslass 31 und die zweite Phase, die weitgehend nur Öl enthält, und oberhalb der Phasengrenzfläche ist, fließt aus dem zweiten Auslass 32. Die Durchflussraten und die Zusammensetzung werden durch die Proportionalventile 60 gesteuert, wie später erläutert wird.

Die Phasentrennkammer 10 enthält auch eine Mehrzahl von Sensoren 40, die das Zusammensetzungsverhältnis des Zweiphasen-Systems erfassen. In Fig. 1 sind die Sensoren 40 vertikal angeordnet und sind z.B. aus UV-Lichtschranken mit einer UV-Lichtquelle z.B. UV-LED und einem UV-Lichtdetektor z.B. Photodiode. Andere Sensorarten sind möglich. Die Sensoren 40 erkennen die Phase an der jeweiligen Höhe des Sensors 40 innerhalb der Phasentrennkammer 10 durch Messung der Transmissionswerte des UV-Lichts durch die Phase. Diese Transmissionswerte können vorher definiert oder gemessen werden. Mindestens vier Sensoren 40 sind in dieser Ausführungsform verwendet.

Für eine erfolgreiche Trennung des Öl-/Wasser-Gemisches ist die Größe des Hohlkörpers 20 sowie die Durchflussraten durch den ersten Auslass 31 und den zweiten Auslass 32 maßgeblich. Die Größe des Hohlkörpers 20 wurde in einem ersten Schritt abgeschätzt, um darauf folgend mittels einer Simulation des Hohlkörpers 20 in dem OpenFO-AM Mikrofluidik-Berechnungsprogramm auf die theoretische Funktion hin überprüft zu werden. Hierzu waren einige Parameter ausschlaggebend. Die Höhe zwischen dem ersten, oberem Auslass 31 und dem zweiten, unterem Auslass 32 an der vertikal angeordneten Kante des Hohlkörpers 20 musste genug Platz für die Sensoren 40 bieten. Die Länge der Phasentrennkammer 10 sollte auch eine Trennung von stabilisierten Phasen (mit Emulgatoren/Tensiden) zulassen. Die Dicke bzw. Tiefe der Phasentrennkammer 10 musste so gewählt werden, dass ein Kapillareffekt bzw. eine Stabilisierung von Tropfen durch nahe beieinanderliegende Seitenwände nicht stattfindet. Über all diesen Parametern stand die Vorgabe, das Gesamtvolumen der Phasentrennkammer 10 so gering wie möglich zu halten. Für das nicht einschränkende Beispiel wurde eine Phasentrennkammer 10 mit einer Länge von 53 mm, eine Höhe von 45 mm und eine Tiefe/Breite von 5 mm berechnet. In dem nicht einschränkenden Beispiel führen diese Vorgaben zu einer Phasentrennkammer 10 mit einem Gesamtvolumen von ~3,7 mL.

Die Auslässe 31 und 32 sowie der Einlass 35 an den Ecken 21, 22 und 23 in der dargestellten Phasentrennkammer 10 sind in den Seitenwänden aufgeführt. Diese können auch seitlich über Bohrungen erfolgen.

Eine Spezialbeschichtung z.B. eine Silanisierung innerhalb der Phasentrennkammer 10 ist auch möglich. Diese Spezialbeschichtung fordert oder beschleunigt das Trennverfahren durch Änderung der Oberflächenspannung der Innenwände.

Das Proportionalventil 60/200 ist beispielhaft in Fig. 2 dargestellt. Das Proportionalventil 60/200 umfasst ein Swagelok-Nadelventil 210 unter Verwendung eines Schrittmotors 220, der über eine Kupplung 225 mit dem Nadelventil 210 verbunden ist. Der Schrittmotor 220 verlängert die Drehachse 215 des Nadelventils 210, da zum Öffnen und Schließen des Nadelventils 210 die Kraft des Schrittmotors 220 ausreicht und kein zusätzliches Getriebe nötig ist.

Für das Nadelventil 210 existieren Datenblätter, die Aufschluss über das mögliche Durchflussvolumen des Nadelventils 210 bei einer festgelegten Ventildrehung ab dem geschlossenen Zustand des Ventils geben. Die Schrittmotoren 220 haben Schrittweiten von 200/400/800 Schritten, was der Anzahl der Schritte für eine 360°-Drehung entspricht (somit 1,8°/0,9°/0,45° pro Schritt). Daher kann eine direkte Berechnung des Durchflussvolumens des Nadelventils 210 in Abhängigkeit der Anzahl der gedrehten Schritte des Schrittmotors 220 vorgenommen werden.

Die Steuerung der Proportionalventile 60/200 erfolgt in einer Ausführungsform des Phasentrenners 5 direkt durch die Steuerungseinheit 50, kann aber auch, bei der alleinigen Nutzung der Proportionalventile 60/200 mit einer kleineren, nicht dargestellten Steuerungseinheit mit Display gesteuert werden.

Die Steuerungseinheit 50 ist implementiert auf einem Arduino Board, basierend auf einer Atmel MCU, in Kombination mit einer dazu passenden MotorShield Steuerungseinheit des Herstellers Adafruit, welche für den Phasentrenner 5 modifiziert wurde. Mit Hilfe dieser Steuerungseinheit 50 kann der Mikrocontroller bis zu zwei Schrittmotoren 220 steuern, die über eine separate Stromquelle versorgt werden können

Die Sensoren 40 wurden in einem Aspekt der Erfindung direkt an die analogen Eingänge des Mikrocontrollers angeschlossen. Um die analogen und damit für Störungen anfälligen Übertragungsleitungen möglichst kurz zu halten, kommt in einem weiteren Aspekt ein A/D-Wandlerchip MCP3208 von Microchip zum Einsatz, der bis zu 8 analoge Signale mit einer Genauigkeit von 12Bit in einen digitalen Wert umwandeln kann und über SPI (Serial Peripheral Interface) ansprechbar ist. Zum Anschluss des Wandlerchips musste die MotorShield Steuerungseinheit modifiziert werden, da in der durch Adafruit verkauften Version, die am Mikrocontroller herausgeführten Anschlüsse für das SPI anderweitig als digitale Ein- und Ausgänge verwendet werden. Die Hardwareveränderung der Steuerungseinheit 50 erforderte auch eine Anpassung der Softwarebibliothek, die zum Ansteuern des MotorShield Steuerungseinheit mittels Arduino frei verfügbar ist. An die Steuerungseinheit 50 sind nur die Sensoren 40 angeschlossen. Die UV-Lichtquellen in den Sensoren 40 werden direkt aus einer eigenen externen Stromversorgung gespeist.

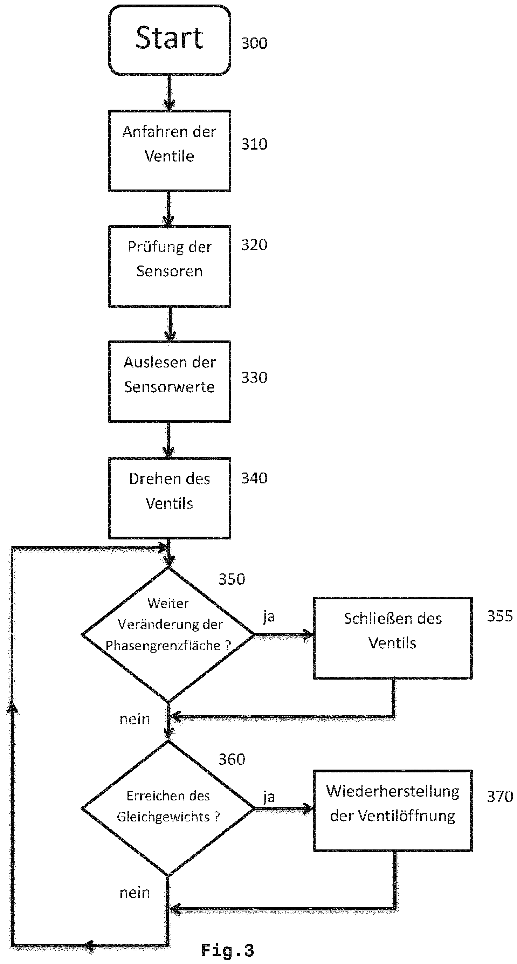

Zum Betrieb des Phasentrenners 5 wurde eine Software in der Programmiersprache C++ unter Verwendung der Arduino-IDE geschrieben. Das Verfahren ist in Fig. 3 abgebildet. In einem ersten Schritt nach dem Start 300 wird ein kurzer Setupprozess (Anfahren 310 der Endpositionen der Ventile und Prüfung 320 der Sensoren 40) durchgeführt. Danach folgen in einem weiteren Schritt 330 ein Auslesen der Sensoren 40 in einstellbaren Intervallen und ein Vergleich mit den vorher definierten Standardwerten für die Transmissionswerte. Im Idealfall werden an den oberen der vier Sensoren 40 die vorher definierten Transmissionswerte für die obere (Öl-) Phase gemessen und analog an den unteren Sensoren 40 die der unteren (Wasser-)Phase. Findet eine Verschiebung der Phasengrenzfläche innerhalb der Phasentrennkammer 10 statt, so ist diese Verschiebung irgendwann durch die Änderung des Transmissionswertes durch das Öl-/Wasser-Gemisch eines der mittleren Sensoren 40 erfassbar.

Die Software reagiert auf diese Verschiebung der Phasengrenzfläche, indem das Proportionalventil 60/200 in einem nächsten Schritt 340 an dem Auslass 31 bzw. 32, dem der Sensor, an der der veränderte Messwert gemessen wurde, zugewandt ist, um eine festgelegte Umdrehung geschlossen wird, und das andere Ventil 31, 32 weiter geöffnet wird. In anderen Worten wird die Durchflussrate an einem der Auslässe 31 bzw. 32 erhöht und an dem anderen der Auslässe verringert. Dies geschieht so lange, bis sich die Phasengrenzfläche wieder in Richtung der Idealposition bewegt. Verändert 345 sich die Position der Phasengrenzfläche jedoch weiter in Richtung eines Auslasses 31, 32, wird bei Erreichen des äußeren Sensors 40 in einem Schritt 350 der dort liegende Auslass vollständig mit Hilfe des Ventils geschlossen, damit nicht die entsprechend andere Phase in den falschen Auslass 31, 32 gelingt. So ist es sogar möglich, dass ein einphasiges System durch den Phasentrenner 5 fließt, ohne dass der Bereich der zweiten Phase berührt wird.

Stellt sich wieder ein Gleichgewicht beider Phasen im Schritt 360 ein, kann die ursprüngliche Ventilöffnung beider Proportionalventile 60/200 im Schritt 370 wiederhergestellt. Die Software erlaubt so eine autonome Phasentrennung ohne weitere Eingriffe von außen. Voraussetzung ist derzeit nur die vorherige Kalibrierung der Sensoren 40 mit den zu erwartenden Phasen.

In einer weiteren Ausführungsform wäre eine statische Kalibrierung mittels zwei Küvetten (je eine pro Phase) bzw. eine dynamische Kalibrierung mit Hilfe von Lichtschranken an den Auslässen 31, 32 denkbar. So kann der Phasentrenner 5 ohne die Notwendigkeit eines Computers genutzt werden.

## Patentansprüche

1. Phasentrennkammer (10) mit einem dreieckförmigen Hohlkörper (20), wobei der dreieckförmigen Hohlkörper (20) einen ersten Auslass (31) an einer ersten Ecke (21), einen zweiten Auslass (32) an einer zweiten Ecke (22) und einen Einlass (35) an einer dritten Ecke (23) aufweist und wobei der dreieckförmige Hohlkörper (20) so angeordnet ist, dass die Kante zwischen der ersten Ecke (21) und der zweiten Ecke (22) im Wesentlichen vertikal angeordnet ist.

2. Phasentrennkammer (10) nach Anspruch 1, wobei der dreieckförmigen Hohlkörper (20) gleichschenklig ist, wobei die erste Seite zwischen der dritten Ecke (23) und der ersten Ecke (21) und die zweite Seite zwischen der dritten Ecke (23) und der ersten Ecke (21) gleich lang sind.

3. Phasentrennkammer (10) nach einem der vorhergehenden Ansprüche, wobei der erste Auslass (31) und/oder der zweite Auslass (32) mit einem Proportionalventil (60, 200) zur Steuerung der Flussrate verbunden sind.

4. Phasentrennkammer (10) nach einem der vorhergehenden Ansprüche, wobei die Phasentrennkammer (10) mindestens zwei Sensoren (40) zur Erfassung der Zusammensetzung des Gemisches in dem dreieckförmigen Hohlkörper (20) aufweist.

5. Phasentrennkammer (10) nach Anspruch 4, wobei die mindestens zwei Sensoren (40) Photodioden zur Erfassung von UV Licht sind.

6. Phasentrennkammer (10) nach Anspruch 4 oder 5, wobei die mindestens zwei Sensoren (40) übereinander in der Nähe der aufrechtstehenden Kante des Hohlkörpers (20) angeordnet sind.

7. Phasentrennkammer (10) nach einem der vorhergehenden Ansprüche, weiter umfassend eine Steuerung (50) zur Steuerung der Flussrate der Flüssigkeit durch den ersten Auslass (31) und den zweiten Auslass (32).

8. Verwendung der Phasentrennkammer (10) nach einem der vorhergehenden Ansprüche zur Trennung von Öl und Wasser.

9. Verfahren zur Trennung von zwei Phasen aus einem Zweiphasen-Gemisch umfassend:
Einleitung des Zweiphasen-Gemisches in eine dreieckförmige Phasentrennkammer (10);
Erfassung des Mischverhältnisses des Gemisches durch eine Mehrzahl von Sensoren (40);
Ableitung der getrennten Phasen durch mehrere Auslässe (31, 32); und
Änderung der Ableitung abhängig von dem erfassten Mischverhältnis.

10. Verfahren nach Anspruch 9, wobei die Erfassung des Mischverhältnisses eine Bestimmung der Lage der Phasengrenzfläche umfasst.

11. Verfahren nach Anspruch 10, weiter umfassend eine Zusperrung eines Auslasses (31, 32), wenn die Phasengrenzfläche einen vorbestimmten Pegel unter- bzw. übersteigt.

12. Verfahren nach einem der Ansprüche 9 bis 11, wobei die Änderung der Ableitung über ein Zudrehen eines Auslassventils (60, 200) erfolgt.
